# EUROPÄISCHE PATENTANMELDUNG

(11) **EP 4 567 412 A1**
(43) Veröffentlichungstag der Anmeldung: **11.06.2025**
(21) Anmeldenummer: 23214236.4
(22) Anmeldetag: 05.12.2023
(51) Int. Cl.: G01N 23/04, G03B 42/04, G09F 3/02

(54) **VORRICHTUNG UND VERFAHREN ZUR QUALITÄTSPRÜFUNG VON WERKSTÜCKEN MITTELS RÖNTGENSTRAHLUNG**

(71) Anmelder: VisiConsult X-Ray Systems & Solutions GmbH, 23617 Stockelsdorf (DE)
(72) Erfinder: Schulenburg, Hajo, 23617 Stockelsdorf (DE); Schulenburg, Finn, 23617 Stockelsdorf (DE)
(74) Vertreter: Patentanwälte Hemmer Lindfeld Frese Partnerschaft mbB

(57) **Zusammenfassung**

Die vorliegende Offenbarung betrifft eine Vorrichtung (1) zur Qualitätsprüfung von Werkstücken (3) mittels Röntgenstrahlung, mit
- einer Röntgenquelle (7) zur Bereitstellung von Röntgenstrahlen (5) entlang eines Röntgenstrahlengangs,
- einem Röntgenstrahlendetektor (9) zur Aufnahme eines Durchstrahlungsbildes (15) von einem durch Identifikationsdaten eindeutig identifizierten Werkstück (3), und
- einem zwischen der Röntgenquelle (7) und dem Röntgenstrahlendetektor (9) angeordneten Werkstückträger (11), wobei das durch die Identifikationsdaten eindeutig identifizierte Werkstück (3) auf dem Werkstückträger (11) montierbar ist, sodass es im Röntgenstrahlengang positioniert ist,
dadurch gekennzeichnet, dass die Vorrichtung (1) ferner ein Metallschildbearbeitungsgerät (17) aufweist, wobei das Metallschildbearbeitungsgerät (17) dazu eingerichtet ist, die Identifikationsdaten in ein Metallschild (19) einzukerben, das temporär für die Aufnahme des Durchstrahlungsbildes (15) derart im Röntgenstrahlengang platzierbar ist, dass die eingekerbten Identifikationsdaten im Durchstrahlungsbild (15) ablesbar sind.

## Beschreibung

Die vorliegende Offenbarung betrifft eine Vorrichtung und ein Verfahren zur Qualitätsprüfung von Werkstücken mittels Röntgenstrahlung. Insbesondere betrifft die vorliegende Offenbarung die automatisierte Fehlererkennung (Automatic Defect Recognition, ADR) in Produktionsabläufen mit metallischen Werkstücken.

Besonders in Branchen mit hohem Produktionsvolumen und standardisierten Bauteilen führt eine automatische Fehlererkennung bzw. Durchstrahlungsbildauswertung in einer Fertigungsstraße zu großen Effizienzsteigerungen bei der Qualitätsprüfung. Gleichzeitig wird die Prozesssicherheit gesteigert durch die Vermeidung von menschlichem Versagen.

Zahlreiche Industrien streben hohe Taktzeiten und eine besonders hohe Prozesssicherheit an. Dazu werden bekanntermaßen in Serie hergestellte metallische Bauteile, insbesondere dessen Schweißnähte oder andere Fügestellen, in einem automatisierten Ablauf mittels Röntgenstrahlung auf ihre Qualität hin geprüft. Es werden allerdings nicht nur Schweißnähte, Fügestellen oder Guss- und Schmiedeteile geprüft, sondern auch oberflächliche Fehler mittels Röntgenstrahlung ermittelt.

Bei einer Serien- oder Massenfertigung von Werkstücken ist häufig die Durchstrahlungsprüfung jedes Werkstücks in einen fortlaufenden, stetigen Produktionsfluss integriert. Hierbei werden die gefertigten Werkstücke über ein Transportsystem einer Röntgenprüfanlage zugeführt, die sowohl innerhalb als auch am Ende einer Fertigungsstraße angeordnet sein kann. Ein mittels der Röntgenanlage erzeugtes Durchstrahlungsbild des Werkstücks wird automatisiert mit einem Referenzbild eines fehlerfreien Werkstücks verglichen, wobei das zu prüfende Werkstück bei fehlender Übereinstimmung von Durchstrahlungsbild und Referenzbild als fehlerhaft aus dem Produktionsfluss entfernt wird. Es geht bei der Qualitätsprüfung mittels Röntgenstrahlung allerdings nicht nur um Fehlererkennung und Aussortierung fehlerhafter Produkte, sondern auch darum, einen Nachweis eines zu erfüllenden Qualitätsniveaus für jedes Werkstück führen zu können. Das Durchstrahlungsbild kann bei Bedarf als ordnungsgemäßer Qualitätsnachweis dienen.

Eine technische Herausforderung ist dabei sicherzustellen, dass ein Durchstrahlungsbild als Qualitätsnachweis eines Werkstücks korrekt und eindeutig dem entsprechenden Wertstück zugeordnet wird. Daraus ergibt sich die Aufgabe der vorliegenden Offenbarung, eine Vorrichtung und ein Verfahren zur Qualitätsprüfung von Werkstücken mittels Röntgenstrahlung bereitzustellen, bei dem ein Durchstrahlungsbild korrekt und eindeutig einem zugehörigen Werkstück zugeordnet werden kann.

Zur Lösung dieser Aufgabe werden eine Vorrichtung und ein Verfahren gemäß den unabhängigen Ansprüchen bereitgestellt. Vorteilhafte Ausführungsformen sind den Unteransprüchen, der Beschreibung und den Figuren zu entnehmen.

Gemäß einem ersten Aspekt der vorliegenden Offenbarung wird eine Vorrichtung zur Qualitätsprüfung von Werkstücken mittels Röntgenstrahlung bereitgestellt, wobei die Vorrichtung
- eine Röntgenquelle zur Bereitstellung von Röntgenstrahlen entlang eines Röntgenstrahlengangs,
- einen Röntgenstrahlendetektor zur Aufnahme eines Durchstrahlungsbildes von einem durch Identifikationsdaten eindeutig identifizierten Werkstück und
- einen zwischen der Röntgenquelle und dem Röntgenstrahlendetektor angeordneten Werkstückträger aufweist,
wobei das durch die Identifikationsdaten eindeutig identifizierte Werkstück auf dem Werkstückträger montierbar ist, sodass es im Röntgenstrahlengang positioniert ist. Erfindungsgemäß weist die Vorrichtung ferner ein Metallschildbearbeitungsgerät auf, wobei das Metallschildbearbeitungsgerät dazu eingerichtet ist, die Identifikationsdaten in ein Metallschild einzukerben, das temporär für die Aufnahme des Durchstrahlungsbildes derart im Röntgenstrahlengang platzierbar ist, dass die eingekerbten Identifikationsdaten im Durchstrahlungsbild ablesbar sind.

Die eingekerbten Identifikationsdaten werden damit untrennbar ein Teil des Durchstrahlungsbilds, sodass eine falsche Zuordnung zwischen Werkstück und Durchstrahlungsbild ausgeschlossen ist.

Der Vorteil der erfindungsgemäßen Vorrichtung liegt darin, dass es keiner Änderung am Röntgenstrahlendetektor weder hinsichtlich dessen Hardware noch dessen Software bedarf. Es ist auch keine Nachbearbeitung der Daten für eine Datenbank notwendig, in der die Durchstrahlungsbilder der geprüften Werkstücke abgelegt werden können.

Optional kann das Metallschildbearbeitungsgerät dazu eingerichtet sein, die Identifikationsdaten in einem Empfangsformat zu empfangen und in einem Ausgabeformat in das Metallschild einzukerben, wobei sich das Ausgabeformat vom Empfangsformat unterscheiden kann oder das Empfangsformat und das Ausgabeformat gleich sein können. Beispielsweise können die Identifikationsdaten mittels einer Seriennummer, einem Strichcode, einem QR-Code oder als digitale Daten auf einem RFID-Chip am Werkstück vorliegen und gelesen werden. Das Metallschildbearbeitungsgerät kann entsprechende Lesemittel aufweisen, um die Identifikationsdaten in dem Empfangsformat einzulesen. Wenn sich das Empfangsformat dazu eignet, die Identifikationsdaten in das Metallschild einzukerben, so können das Empfangsformat und das Ausgabeformat gleich bleiben. Andernfalls ist es sinnvoll, wenn das Metallschildbearbeitungsgerät die im Empfangsformat empfangenen Identifikationsdaten in ein geeignetes Ausgabeformat umwandelt und die Identifikationsdaten in dem Ausgabeformat in das Metallschild einkerbt. Ein geeignetes Ausgabeformat kann beispielsweise eine alphanummerische Darstellung einer Seriennummer sein.

Optional kann das Metallschild temporär für die Aufnahme des Durchstrahlungsbildes am Werkstück anbringbar sein. Dies ist insbesondere dann sinnvoll, wenn das Bild vom Werkstück das gesamte Durchstrahlungsbild ausfüllt. Vorzugsweise kann das Metallschild kurzzeitig an das Werkstück angeklebt werden und anschließend entfernt werden.

Optional kann die Vorrichtung ferner einen zwischen der Röntgenquelle und dem Röntgenstrahlendetektor angeordneten Metallschildhalter aufweisen, wobei das Metallschild an dem Metallschildhalter anbringbar ist, um es an einer gewünschten Position im Röntgenstrahlengang zu positionieren. Dies ist vorteilhaft, um eine feste Position der Identifikationsdaten im Durchstrahlungsbild reproduzierbar sicherzustellen. Die Identifikationsdaten finden sich dann immer an der gleichen Stelle im Durchstrahlungsbild für sämtliche geprüften Werkstücke. Dies vereinfacht ein ggf. nachfolgendes Einscannen der Identifikationsdaten aus dem Durchstrahlungsbild.

Optional kann der Metallschildhalter durch einen Roboterarm gebildet werden, der dazu eingerichtet ist, automatisiert das Metallschild in der gewünschten Position in den Röntgenstrahlengang zu halten. Dies ist besonders vorteilhaft, um die Prozessgeschwindigkeit zu erhöhen und eine Vielzahl von Werkstücken in Serie effizient hintereinander zu prüfen.

Optional kann das Metallschildbearbeitungsgerät ein manuell bedienbares Mobilgerät sein, wobei das Metallschildbearbeitungsgerät Eingabemittel aufweist, über welche die einzukerbenden Identifikationsdaten manuell eingebbar sind. Dies ist eine sehr einfache Lösung, die sehr schnell und günstig bei einem bestehenden System nachrüstbar ist und durch eine Bedienperson einfach anwendbar ist. Eine Bedienperson kann beispielsweise eine Seriennummer des Werkstücks ablesen, diese manuell in das Metallschildbearbeitungsgerät eingeben und das Metallschild mit der entsprechend eingekerbten Seriennummer im Röntgenstrahlengang platzieren.

Optional kann das Metallschildbearbeitungsgerät einen Einzugsschacht für das Metallschild und einen Ausgabeschacht für das Metallschild aufweisen, wobei das Metallschildbearbeitungsgerät dazu eingerichtet ist, das Metallschild vom Einzugschacht zum Ausgabeschacht zu transportieren und zwischen dem Einzugschacht und dem Ausgabeschacht die Identifikationsdaten in das Metallschild einzukerben. Dadurch ist es möglich, einen Metallblechstreifen in den Einzugschacht zu stecken und daraus mittels des Metallschildbearbeitungsgeräts ein Metallschild mit den eingekerbten Identifikationsdaten aus dem Ausgabeschacht zu machen und dieses auszuwerfen.

Optional kann das Metallschild eine Materialdicke aufweisen und das Metallschildbearbeitungsgerät dazu eingerichtet sein, die Identifikationsdaten mit einer Kerbtiefe vom mindestens 1% der Materialdicke in das Metallschild einzukerben. Dies ist vorteilhaft, um im Durchstrahlungsbild für die Lesbarkeit der Identifikationsdaten im Durchstrahlungsbild ausreichend hohen Kontrast zu erzielen. Für den Fall, dass das Metallschild auf dem Werkstück angebracht ist und die Materialdicke des Werkstücks hinzukommt, ist es sinnvoll, wenn die Identifikationsdaten entsprechend tiefer in das Metallschild eingekerbt werden.

Optional kann das Metallschildbearbeitungsgerät zum Empfang der einzukerbenden Identifikationsdaten eine Kommunikationsschnittstelle aufweisen. Beispielsweise kann über die Kommunikationsschnittstelle eine Kommunikationsverbindung mit einer Datenbank bestehen, aus welcher die einzukerbenden Identifikationsdaten zu entnehmen sind oder zugesandt werden. Die Vorrichtung kann alternativ oder zusätzlich dazu ein Lesegerät aufweisen, das die Identifikationsdaten des jeweils zu prüfenden Werkstücks einliest und diese dann dem Metallschildbearbeitungsgerät über die Kommunikationsschnittstelle zur Verfügung stellt.

Optional kann der Röntgenstrahlendetektor dazu eingerichtet sein, das Durchstrahlungsbild digital mittels Sensoren und/oder analog mittels eines Films aufzunehmen. Vorzugsweise wird ein analog mittels eines Films aufgenommenes Durchstrahlungsbild anschließend mittels eines Scanners digitalisiert. Unabhängig davon, ob das Durchstrahlungsbild gleich digital mittels Sensoren oder als digitalisierter Scan eines analogen Durchstrahlungsbilds aufgenommen wird, ist es vorteilhaft, wenn das digital zur Verfügung stehende Durchstrahlungsbild in einer Datenbank abgespeichert wird, um das Ergebnis der Qualitätsprüfung für jedes Werkstück bei Bedarf nachweisen zu können.

Gemäß einem weiteren Aspekt der vorliegenden Offenbarung wird ein Verfahren zur Qualitätsprüfung von Werkstücken mittels Röntgenstrahlung bereitgestellt, wobei das Verfahren folgende Schritte aufweist:
- Positionieren eines durch Identifikationsdaten eindeutig identifizierten Werkstücks auf einem Werkstückträger zwischen einer Röntgenquelle und einem Röntgenstrahlendetektor,
- Einkerben der Identifikationsdaten in ein Metallschild mittels eines Metallschild bearbeitungsgeräts,
- Positionieren des Metallschilds zwischen der Röntgenquelle und dem Röntgenstrahlendetektor,
- Erzeugen von Röntgenstrahlen entlang eines Röntgenstrahlengangs mittels der Röntgenquelle, und
- Aufnehmen eines gemeinsamen Durchstrahlungsbildes vom Werkstück und von dem Metallschild mittels des Röntgenstrahlendetektors, sodass die in das Metallschild eingekerbten Identifikationsdaten im Durchstrahlungsbild ablesbar sind.

Vorzugsweise wird das Verfahren mit der zuvor beschriebenen Vorrichtung betrieben.

Optional kann das Metallschild am Werkstück angebracht werden.

Optional kann das Metallschild mittels eines Roboterarms in den Röntgenstrahlengang gehalten werden.

Optional können die Identifikationsdaten mittels des Metallschildbearbeitungsgeräts in das Metallschild eingeritzt werden.

Optional können die Identifikationsdaten mit einer Kerbtiefe von mindestens 1% der Materialdicke des Metallschilds in das Metallschild eingekerbt werden.

Im Folgenden wird das hierin offenbarte System näher anhand der beiliegenden Figuren erläutert. Es zeigen:
- Fig. 1: eine schematische perspektivische Darstellung eines Beispiels einer Ausführungsform der hierin offenbarten Vorrichtung;
- Fig. 2: eine schematische Draufsicht auf ein Beispiel einer Ausführungsform der hierin offenbarten Vorrichtung; und
- Fig. 3: ein weiteres Beispiel einer Ausführungsform der hierin offenbarten Vorrichtung.

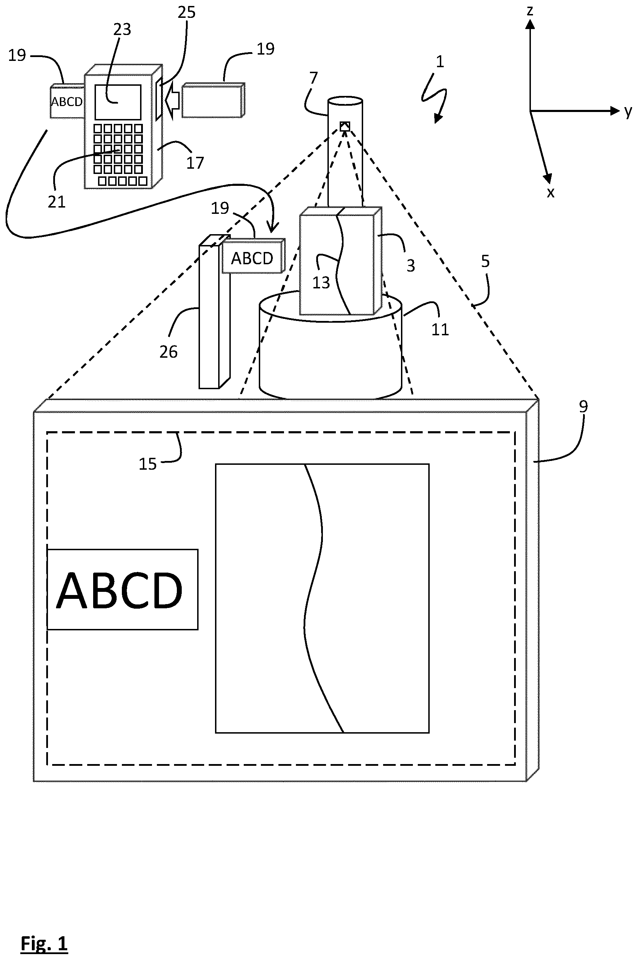

Fig. 1 zeigt eine Vorrichtung 1 zur Qualitätsprüfung von Werkstücken 3 mittels Röntgenstrahlung 5. Zur besseren Orientierung ist in den Figuren jeweils ein rechtshändiges kartesisches Koordinatensystem gezeigt, bei dem die z-Achse einer vertikalen Achse nach oben, die x-Achse einer horizontalen Achse nach vorne und die y-Achse einer horizontalen Achse zur Seite entspricht. Entsprechend sollen sich die Begriffe "oben" und "unten" auf die positive bzw. negative z-Achse beziehen. Entsprechend beziehen sich die Begriffe "vorne" und "hinten" auf die positive bzw. negative x-Achse. Die Begriffe "rechts" und "links" beziehen sich auf die positive bzw. negative y-Achse.

In Figur 1 weist die Vorrichtung 1 ganz hinten eine Röntgenquelle 7 zur Bereitstellung der Röntgenstrahlen 5 auf. Die Röntgenstrahlen 5 erstrecken sich kegelförmig im Wesentlichen nach vorne in positive x-Richtung auf einen Röntgenstrahlendetektor 9 zu, der in Figur 1 als Teil der Vorrichtung 1 ganz vorne angeordnet ist. Es bildet sich somit ein kegelförmiger Röntgenstrahlengang durch die Röntgenstrahlen 5 zwischen der Röntgenquelle 7 und dem Röntgenstrahlendetektor 9 aus. In x-Richtung zwischen der Röntgenquelle 7 und dem Röntgenstrahlendetektor 9 ist ein Werkstückträger 11 angeordnet, auf dem ein Werkstück 3 montiert ist.

Das Werkstück 3 weist hier eine auf ihre Qualität hin zu prüfende Schweißnaht 13 auf. Zur Qualitätsprüfung des Werkstücks 3 ist das Werkstück 3 so auf dem Werkstückträger 11 montiert, dass es in dem von dem Röntgenstrahlen 5 gebildeten kegelförmigen Röntgenstrahlengang positioniert ist. Dadurch lässt sich ein Durchstrahlungsbild 15 vom Werkstück 3 mittels des Röntgenstrahlendetektors 9 aufnehmen.

Das Werkstück 3 ist eindeutig durch Identifikationsdaten identifiziert, wobei die Identifikationsdaten beispielsweise in Form einer Seriennummer, einem Strichcode, einem QR-Code oder digital in einem RFID-Chip gespeichert auslesbar zur Verfügung stehen. Das Werkstück 3 kann beispielsweise ein entsprechendes Label in Form eines Aufklebers oder eines RFID-Tags und/oder in Form eines Datenbankeintrags aufweisen.

Die Vorrichtung 1 weist ferner ein Metallschildbearbeitungsgerät 17 auf, das dazu eingerichtet ist, die Identifikationsdaten, die das Werkstück 3 eindeutig identifizieren, in ein Metallschild 19 einzukerben. Das Metallschildbearbeitungsgerät 17 ist in dem gezeigten Ausführungsbeispiel ein manuell bedienbares Mobilgerät mit einem Eingabemittel in Form einer Tastatur 21, mittels welcher eine Bedienperson die einzukerbenden Identifikationsdaten manuell eingeben kann. Das Metallschildbearbeitungsgerät 17 weist hier zusätzlich ein Display 23 auf, in dem einer Bedienperson zur Kontrolle die einzukerbenden Identifikationsdaten angezeigt werden können. Das Metallschildbearbeitungsgerät 17 weist an einer Seite einen Einzugschacht 25 auf, in den ein noch zu bearbeitendes Metallschild 19 in Form eines Metallblechstreifens eingesteckt werden kann. Das Metallschild 19 wird mittels des Metallschildbearbeitungsgeräts 17 vom Einzugschacht 25 zu einem auf der gegenüberliegenden Seite des Metallschildbearbeitungsgeräts 17 angeordneten Ausgabeschacht (nicht sichtbar in Figur 1) transportiert, wobei die Identifikationsdaten zwischen dem Einzugschacht und dem Ausgabeschacht in das Metallschild 19 eingekerbt werden. Nachdem die Identifikationsdaten in das Metallschild 19 eingekerbt wurden, wird das Metallschild 19 temporär für die Aufnahme des Durchstrahlungsbildes 15 mittels eines Metallschildhalters 26 derart im Röntgenstrahlengang platziert, dass die eingekerbten Identifikationsdaten im Durchstrahlungsbild 15 ablesbar sind. Der Metallschildhalter 26 kann ein Roboterarm sein. Das Metallschild 19 wird also zeitgleich zusammen mit dem Werkstück 3 von den Röntgenstrahlen 5 durchstrahlt, um ein gemeinsames Durchstrahlungsbild 15 vom Werkstück 3 und dem Metallschild 19 zu erzeugen, das sowohl die eingekerbten Identifikationsdaten enthält als auch ein Bild von der auf Ihre Qualität hin zu überprüfende Schweißnaht 13 des Werkstücks 3 umfasst. In der in Figur 1 gezeigten Ausführungsform füllt das Werkstück 3 den Röntgenstrahlengang nicht vollständig aus, sodass neben dem Werkstück 3 noch Platz im Röntgenstrahlengang ist, um das Metallschild 19 im Röntgenstrahlengang zu positionieren.

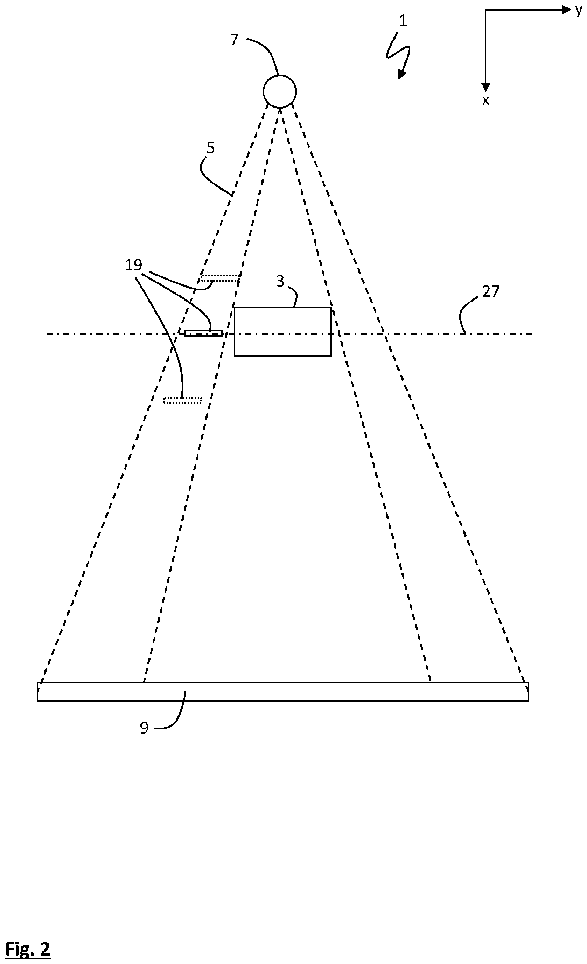

Figur 2 zeigt die entsprechende Situation in einer Draufsicht schematisch. In x-Richtung kann das Metallschild 19 in der gleichen Gegenstandsebene 27 liegen wie das Werkstück 3. In Figur 2 sind gestrichelt angedeutet alternative Positionen des Metallschilds 19 vor der Gegenstandsebene 27 oder dahinter. Durch die Kegelform des Röntgenstrahlengangs wird die Darstellung der eingekerbten Identifikationsdaten im Durchstrahlungsbild größer, je näher das Metallschild 19 zur Röntgenstrahlenquelle 7 platziert wird.

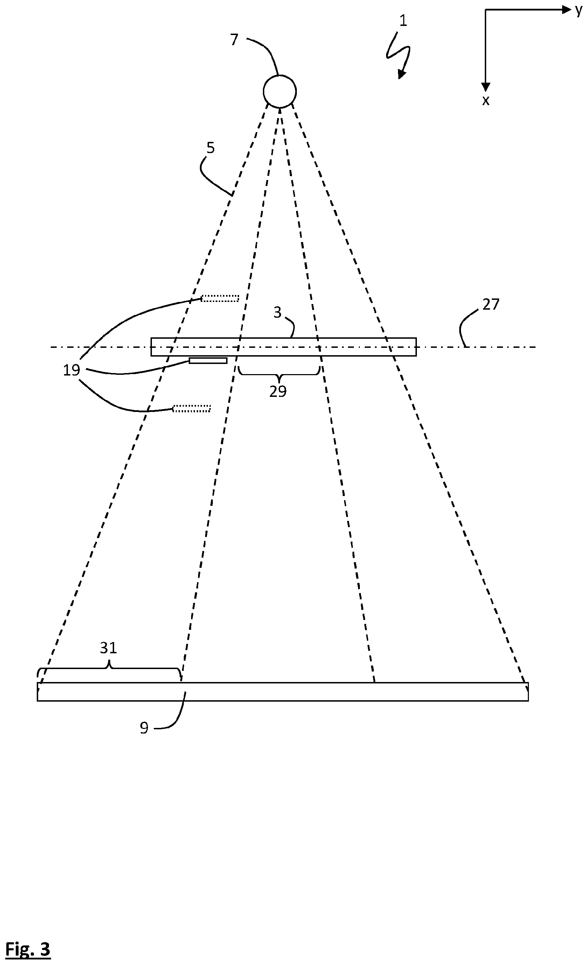

In Figur 3 ist eine Situation gezeigt, bei der das Werkstück 3 den Röntgenstrahlengang in der Gegenstandsebene 27 so weit ausfüllt, dass kein ausreichender Platz neben dem Werkstück 3 ist, um das Metallschild 19 daneben im Röntgenstrahlengang zu platzieren. In diesem Fall ist es sinnvoll, das Metallschild 19 auf dem Werkstück 3 anzubringen. Sinnvollerweise wird das Metallschild 19 an einem Rand außerhalb eines zentral zu untersuchenden Bereichs 29, wo beispielsweise die zu überprüfende Schweißnaht 13 liegt, angebracht. Im Durchstrahlungsbild sind die eingekerbten Identifikationsdaten dann in einem Randbereich 31 des Durchstrahlungsbilds 15 ablesbar. Auch in diesem Ausführungsbeispiel kann das Metallschild wahlweise vor oder hinter der Gegenstandsebene 27 im Röntgenstrahlengang positioniert sein (siehe gestrichelte optionale Positionen des Metallschilds 19).

### Bezugszeichenliste:

- 1: Vorrichtung
- 3: Werkstück
- 5: Röntgenstrahlen
- 7: Röntgenstrahlenquelle
- 9: Röntgenstrahlendetektor
- 11: Werkstückträger
- 13: Schweißnaht
- 15: Durchstrahlungsbild
- 17: Metallschildbearbeitungsgerät
- 19: Metallschild
- 21: Tastatur
- 23: Display
- 25: Einzugsschacht
- 26: Metallschildhalter
- 27: Gegenstandsebene
- 29: zentraler Bereich des Werkstücks
- 31: Randbereich des Durchstrahlungsbilds

## Patentansprüche

1. Vorrichtung (1) zur Qualitätsprüfung von Werkstücken (3) mittels Röntgenstrahlung, mit
- einer Röntgenquelle (7) zur Bereitstellung von Röntgenstrahlen (5) entlang eines Röntgenstrahlengangs,
- einem Röntgenstrahlendetektor (9) zur Aufnahme eines Durchstrahlungsbildes (15) von einem durch Identifikationsdaten eindeutig identifizierten Werkstück (3), und
- einem zwischen der Röntgenquelle (7) und dem Röntgenstrahlendetektor (9) angeordneten Werkstückträger (11), wobei das durch die Identifikationsdaten eindeutig identifizierte Werkstück (3) auf dem Werkstückträger (11) montierbar ist, sodass es im Röntgenstrahlengang positioniert ist,
**dadurch gekennzeichnet, dass** die Vorrichtung (1) ferner ein Metallschildbearbeitungsgerät (17) aufweist, wobei das Metallschildbearbeitungsgerät (17) dazu eingerichtet ist, die Identifikationsdaten in ein Metallschild (19) einzukerben, das temporär für die Aufnahme des Durchstrahlungsbildes (15) derart im Röntgenstrahlengang platzierbar ist, dass die eingekerbten Identifikationsdaten im Durchstrahlungsbild (15) ablesbar sind.

2. Vorrichtung (1) nach Anspruch 1, wobei das Metallschildbearbeitungsgerät (17) dazu eingerichtet ist, die Identifikationsdaten in einem Empfangsformat zu empfangen und in einem Ausgabeformat in das Metallschild (19) einzukerben, wobei sich das Ausgabeformat vom Empfangsformat unterscheidet oder das Empfangsformat und das Ausgabeformat gleich sind.

3. Vorrichtung (1) nach Anspruch 1 oder 2, wobei das Metallschild (19) temporär für die Aufnahme des Durchstrahlungsbildes (15) am Werkstück (3) anbringbar ist.

4. Vorrichtung (1) nach einem der vorhergehenden Ansprüche, ferner mit einem zwischen der Röntgenquelle (7) und dem Röntgenstrahlendetektor (9) angeordneten Metallschildhalter (26), wobei das Metallschild (19) an dem Metallschildhalter (29) anbringbar ist, um es an einer gewünschten Position im Röntgenstrahlengang zu positionieren.

5. Vorrichtung (1) nach Anspruch 4, wobei der Metallschildhalter (26) durch einen Roboterarm gebildet wird, der dazu eingerichtet ist, automatisiert das Metallschild (19) in der gewünschten Position in den Röntgenstrahlengang zu halten.

6. Vorrichtung (1) nach einem der vorhergehenden Ansprüche, wobei das Metallschildbearbeitungsgerät (17) ein manuell bedienbares Mobilgerät ist, wobei das Metallschildbearbeitungsgerät (17) Eingabemittel aufweist, über welche die einzukerbenden Identifikationsdaten manuell eingebbar sind.

7. Vorrichtung (1) nach einem der vorhergehenden Ansprüche, wobei das Metallschildbearbeitungsgerät (17) einen Einzugschacht (25) für das Metallschild (19) und einen Ausgabeschacht für das Metallschild (19) aufweist, wobei das Metallschildbearbeitungsgerät (17) dazu eingerichtet ist, das Metallschild (19) vom Einzugschacht (25) zum Ausgabeschacht zu transportieren und zwischen dem Einzugschacht (25) und dem Ausgabeschacht die Identifikationsdaten in das Metallschild (19) einzukerben.

8. Vorrichtung (1) nach einem der vorhergehenden Ansprüche, wobei das Metallschild (19) eine Materialdicke aufweist und das Metallschildbearbeitungsgerät (17) dazu eingerichtet ist, die Identifikationsdaten mit einer Kerbtiefe von mindestens 1% der Materialdicke in das Metallschild (19) einzukerben.

9. Vorrichtung (1) nach einem der vorhergehenden Ansprüche, wobei das Metallschildbearbeitungsgerät (17) zum Empfang der einzukerbenden Identifikationsdaten eine Kommunikationsschnittstelle aufweist.

10. Vorrichtung (1) nach einem der vorhergehenden Ansprüche, wobei der Röntgenstrahlendetektor (9) dazu eingerichtet ist, das Durchstrahlungsbild (15) digital mittels Sensoren und/oder analog mittels eines Films aufzunehmen.

11. Vorrichtung (1) nach einem der vorhergehenden Ansprüche, wobei der Röntgenstrahlendetektor (9) dazu eingerichtet ist, das Durchstrahlungsbild (15) analog mittels eines Films aufzunehmen und mittels eines Scanners zu digitalisieren.

12. Verfahren zur Qualitätsprüfung von Werkstücken (3) mittels Röntgenstrahlung, mit den folgenden Schritten:
- Positionieren eines durch Identifikationsdaten eindeutig identifizierten Werkstücks (3) auf einem Werkstückträger zwischen einer Röntgenquelle und einem Röntgenstrahlendetektor (9),
- Einkerben der Identifikationsdaten in ein Metallschild (19) mittels eines Metallschildbearbeitungsgeräts (17),
- Positionieren des Metallschilds (19) zwischen der Röntgenquelle und dem Röntgenstrahlendetektor (9),
- Erzeugen von Röntgenstrahlen (5) entlang eines Röntgenstrahlengangs mittels der Röntgenquelle, und
- Aufnehmen eines gemeinsamen Durchstrahlungsbildes (15) vom Werkstück (3) und von dem Metallschild (19) mittels des Röntgenstrahlendetektors (9), sodass die in das Metallschild (19) eingekerbten Identifikationsdaten im Durchstrahlungsbild (15) ablesbar sind.

13. Verfahren nach Anspruch 12, wobei das Metallschild (19) am Werkstück (3) angebracht wird.

14. Verfahren nach Anspruch 12 oder 13, wobei das Metallschild (19) mittels eines Roboterarms in den Röntgenstrahlengang gehalten wird.

15. Verfahren nach einem der Ansprüche 12 bis 14, wobei die Identifikationsdaten mittels des Metallschildbearbeitungsgeräts (17) in das Metallschild (19) eingeritzt werden.

16. Verfahren nach einem der Ansprüche 12 bis 15, wobei die Identifikationsdaten mit einer Kerbtiefe von mindestens 1% einer Materialdicke des Metallschilds in das Metallschild (19) eingekerbt werden.
